# EUROPEAN PATENT SPECIFICATION

(11) **EP 3 321 544 B1**
(45) Date of publication and mention of the grant of the patent: **18.09.2019**
(21) Application number: 17199015.3
(22) Date of filing: 27.10.2017
(51) Int. Cl.: F16J 13/00, B01J 19/00, B01J 3/03, C21D 9/00, F16J 15/06, F27B 17/00

(54) **VACUUM DOUBLE STRUCTURE AND HEAT TREAT FURNACE**
VAKUUMDOPPELSTRUKTUR UND WÄRMEBEHANDLUNGSOFEN
DOUBLE STRUCTURE SOUS VIDE ET FOUR DE TRAITEMENT THERMIQUE

(30) Priority: 11.11.2016 JP 2016220909
(43) Date of publication of application: 16.05.2018
(73) Proprietor: TOYOTA JIDOSHA KABUSHIKI KAISHA, Toyota-shi, Aichi-ken, 471-8571 (JP)
(72) Inventor: YAMASHITA, Osamu, Aichi-ken, 471-8571 (JP)
(74) Representative: J A Kemp

(56) References cited:
- EP-A2- 0 659 942
- DE-C- 607 103
- FR-A- 558 713
- US-A- 3 056 664

## Description

### BACKGROUND OF THE INVENTION

### 1. Field of the Invention

The present invention relates to a vacuum double structure, and particularly to a vacuum double structure in which a space between an inner wall member and an outer wall member is sealed by a sealing member, and a heat treat furnace.

### 2. Description of Related Art

A vacuum double structure thermally insulated such that a space between a tubular inner wall and a tubular outer wall is evacuated is widely used for a thermos and the like. In such a vacuum double structure, the inner wall and the outer wall that are made of metal are formed integrally in general, so inner heat is more or less transmitted from the inner wall to the outer wall to escape. In view of this, in order to improve heat insulating properties, it is conceivable that the inner wall and the outer wall are made of different members and a space therebetween is sealed by an O-ring. Japanese Patent Application Publication No. 2002-241939 (JP 2002-241939 A) discloses a vacuum processing device in which a plurality of members is sealed by an O-ring, although the vacuum processing device is not a vacuum double structure. DE 607 103 C discloses a vacuum double structure in accordance with the preamble of claim 1.

### SUMMARY OF THE INVENTION

The inventor(s) of the present invention found the following points in terms of a vacuum double structure in which a space between an inner wall member and an outer wall member that are made of metal is sealed by a sealing member. In a vacuum double structure in which an inner wall member and an outer wall member are made of different members, when a distance between the inner wall member and the outer wall member via a sealing member, i.e., an O-ring is enlarged, heat insulating properties are improved. On this account, if the O-ring is just enlarged in diameter, the heat insulating properties should be improved.

However, in the first place, the enlargement in diameter of the O-ring has a limit, and it is difficult to sufficiently enlarge the distance between the inner wall member and the outer wall member. Besides, when the O-ring is enlarged in diameter, respective contact areas of the O-ring crushed by vacuum with the inner wall member and the outer wall member increase, which promotes heat transfer from the inner wall member to the outer wall member via the O-ring, thereby causing such a possibility that the heat insulating properties are not improved so much.

The present invention provides a vacuum double structure excellent in heat insulating properties.

A vacuum double structure according to one aspect of the present invention is a vacuum double structure including: a tubular and metal inner wall member; a tubular and metal outer wall member in which the inner wall member is accommodated; and a sealing member provided between a facing surface of the inner wall member and a facing surface of the outer wall member. The sealing member includes an annular spacer, a first annular packing material, and a second annular packing material; the annular spacer is provided between the facing surface of the inner wall member and the facing surface of the outer wall member; the first annular packing material is accommodated in a first groove formed on a first opposed surface of the spacer with respect to the facing surface of the inner wall member and abuts with the facing surface of the inner wall member; the second annular packing material is accommodated in a second groove formed on a second opposed surface of the spacer with respect to the facing surface of the outer wall member and abuts with the facing surface of the outer wall member; and the sealing member maintains a space between the inner wall member and the outer wall member in a vacuum state.

With the vacuum double structure according to the one aspect of the present invention, a distance between respective facing surfaces of the inner wall member and the outer wall member can be enlarged not by enlarging the annular packing material in diameter, but by providing the spacer. Further, since the first and second annular packing materials accommodated in respective grooves of the spacer abut with the inner wall member and the outer wall member, respectively, it is possible to restrain promotion of heat transfer due to an increase in contact areas between the annular packing materials crushed by vacuum with the inner wall member and the outer wall member. Accordingly, with the vacuum double structure according to the present embodiment, it is possible to improve heat insulating properties.

The spacer may be a member made of resin and having elasticity, and the spacer may be supported by a metal belt-shaped ring provided on an inner peripheral surface of the spacer and a metal belt-shaped ring provided on an outer peripheral surface of the spacer. With such a configuration, it is possible to restrain the spacer from buckling in a vacuum state.

A heat treat furnace according to one aspect of the present invention includes a first vacuum double structure and a second vacuum double structure. The first vacuum double structure and the second vacuum double structure are the above vacuum double structure, and the heat treat furnace has a structure in which a flange portion of an inner wall member of the first vacuum double structure and a flange portion of an inner wall member of the second vacuum double structure are placed to face each other via a third annular packing material.

With the present invention, it is possible to provide a vacuum double structure and a heat treat furnace excellent in heat insulating properties.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective sectional view of a vacuum double structure according to a first embodiment;
FIG. 2 is a plan view of a spacer 32 in the vacuum double structure according to the first embodiment;
FIG. 3 is a sectional view of a heat treat furnace to which the vacuum double structure according to the first embodiment is applied; and
FIG. 4 is a partial sectional view of a vacuum double structure according to a second embodiment.

### DETAILED DESCRIPTION OF EMBODIMENTS

The following describes concrete embodiments to which the present invention is applied with reference to the drawings. However, the present invention is not limited to the following embodiments. Further, the following description and drawings are simplified appropriately for clarification of the description.

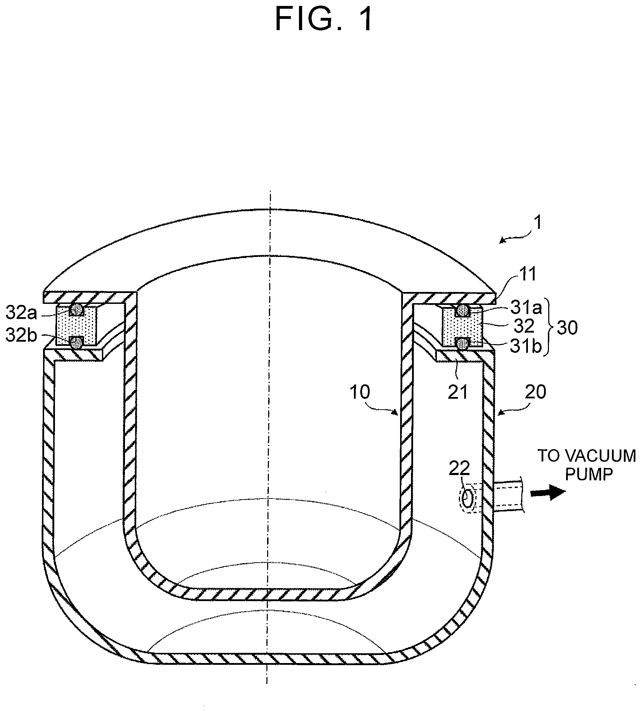

(First Embodiment) First, with reference to FIG. 1, the following describes a vacuum double structure according to the first embodiment. FIG. 1 is a perspective sectional view of the vacuum double structure according to the first embodiment. As illustrated in FIG. 1, the vacuum double structure 1 according to the present embodiment includes an inner wall member 10, an outer wall member 20, and a sealing member 30, and can be applied to a heat treat furnace, for example.

As illustrated in FIG. 1, the inner wall member 10 is a tubular member made of metal such as stainless steel (that is, a metal member). One end of the inner wall member 10 is a closed end, and the other end thereof is an open end. A flange portion 11 projecting outwardly is provided in the open end of the inner wall member 10.

Similarly to the inner wall member 10, the outer wall member 20 is also a tubular member made of metal such as stainless steel (that is, a metal member). One end of the outer wall member 20 is a closed end, and the other end thereof is an open end. A flange portion 21 projecting inwardly is provided in the open end of the outer wall member 20. The inner wall member 10 is inserted from an open end of the outer wall member 20, and the vacuum double structure 1 has a bottomed double tubular structure. An exhaust port 22 communicating with a vacuum pump is formed on the outer wall member 20 and can evacuate a space between the inner wall member 10 and the outer wall member 20.

The sealing member 30 is a member having an annular shape in a plan view and fitted by insertion between respective facing surfaces of the flange portion 11 of the inner wall member 10 and the flange portion 21 of the outer wall member 20. By the sealing member 30, the space between the inner wall member 10 and the outer wall member 20 can be maintained in a vacuum state. Note that the inner wall member 10 and the outer wall member 20 may have open ends at both ends so that respective sealing members 30 are provided at the both ends.

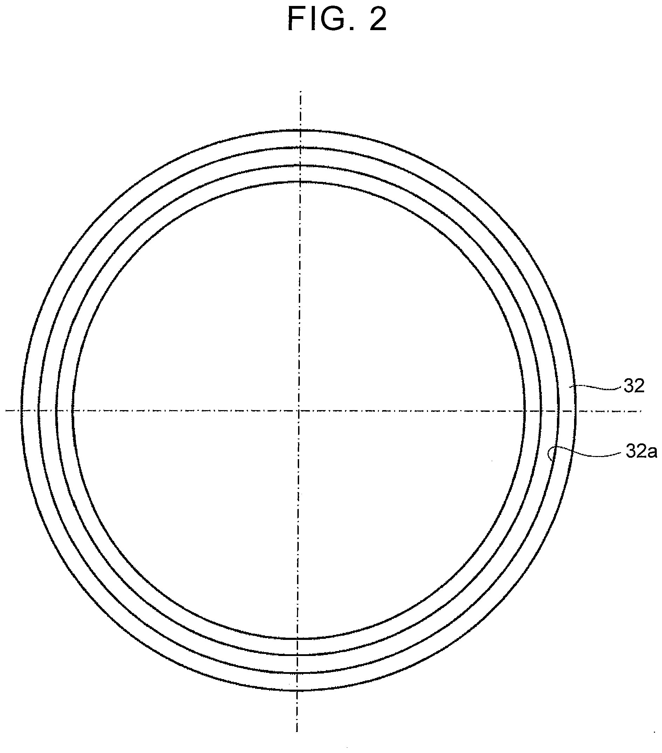

The sealing member 30 includes two O-rings 31a, 31b and a spacer 32. Here, FIG. 2 is a plan view of the spacer 32 in the vacuum double structure according to the first embodiment. As illustrated in FIGS. 1, 2, the spacer 32 has a rectangular section and an annular shape in a plan view, and is made of a material (e.g., resin, ceramic, or the like) more excellent in heat insulating properties than metal. The material should be used selectively for different purposes as appropriate. More specifically, the spacer 32 is made of fluororesin, and the like, similarly to the O-rings 31a, 31b, for example.

As illustrated in FIGS. 1, 2, an opposed surface of the spacer 32 with respect to the facing surface of the flange portion 11 of the inner wall member 10 has a groove (a first groove) 32a in which the O-ring 31a is accommodated. In the meantime, as illustrated in FIG. 1, an opposed surface of the spacer 32 with respect to the facing surface of the flange portion 21 of the outer wall member 20 has a groove (a second groove) 32b in which the O-ring 31b is accommodated.

Since the grooves 32a, 32b are formed in the spacer 32, it is not necessary to form grooves to accommodate the O-rings 31a, 31b therein on respective facing surfaces of the flange portion 11 of the inner wall member 10 and the flange portion 21 of the outer wall member 20, and thus, the vacuum double structure 1 can be easily manufactured. Note that, in an example of FIG. 1, sectional shapes of the grooves 32a, 32b are a rectangular shape, but are not limited in particular. For example, the sectional shapes of the grooves 32a, 32b may be a triangular shape, or other polygonal shapes, or may be a semicircular shape, a semi-elliptical shape, or the like shape.

The O-ring (a first O-ring) 31a is accommodated in the groove 32a of the spacer 32, and abuts with the facing surface of the flange portion 11 of the inner wall member 10. The O-ring (a second O-ring) 31b is accommodated in the groove 32b of the spacer 32, and abuts with the facing surface of the flange portion 21 of the outer wall member 20.

As such, the O-rings 31a, 31b abut with in the grooves 32a, 32b of the spacer 32, respectively, and the O-rings 31a, 31b abut with the flange portion 11 of the inner wall member 10 and the flange portion 21 of the outer wall member 20, respectively. Hereby, the space between the flange portion 11 of the inner wall member 10 and the flange portion 21 of the outer wall member 20 is sealed.

In the vacuum double structure according to the present embodiment, by providing the spacer 32 between respective facing surfaces of the inner wall member 10 and the outer wall member 20, it is possible to freely enlarge the distance therebetween, without enlarging the O-rings in diameter.

Further, since the O-ring 31a having a small diameter and accommodated in the groove 32a of the spacer 32 abuts with the flange portion 11 of the inner wall member 10, it is possible to restrain promotion of heat transfer due to an increase in a contact area between the O-ring 31a crushed by vacuum with the inner wall member 10.

Similarly, since the O-ring 31b having a small diameter and accommodated in the groove 32b of the spacer 32 abuts with the flange portion 21 of the outer wall member 20, it is possible to restrain promotion of heat transfer due to an increase in a contact area between the O-ring 31b crushed by vacuum with the outer wall member 20. Accordingly, with the vacuum double structure according to the present embodiment, it is possible to improve heat insulating properties.

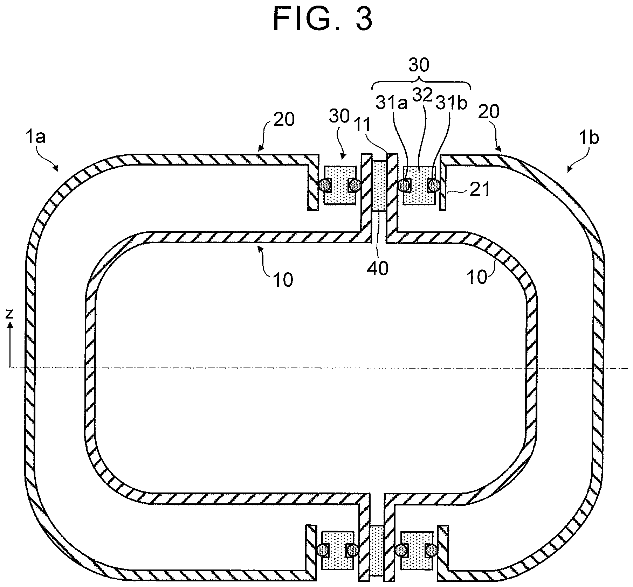

FIG. 3 is a sectional view of a heat treat furnace to which the vacuum double structure according to the first embodiment is applied. The heat treat furnace has such a structure that respective flange portions 11 of respective inner wall members 10 of a vacuum double structure la according to the first embodiment and a vacuum double structure 1b according to the first embodiment are placed to face each other via a packing material 40. The heat treat furnace is suitably used for a low temperature purpose of around 200°C, for example. A heat treatment object (not shown) is accommodated inside the inner wall members 10. Thus, with the use of the vacuum double structure according to the first embodiment, it is possible to provide a heat treat furnace excellent in heat insulating properties.

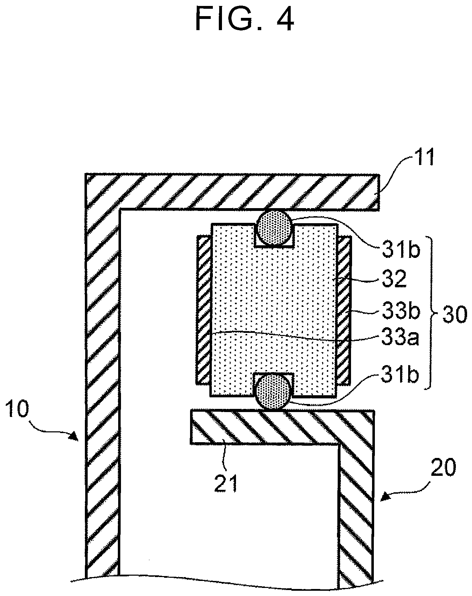

(Second Embodiment) Referring now to FIG. 4, the following describes a vacuum double structure according to the second embodiment. FIG. 4 is a partial sectional view of the vacuum double structure according to the second embodiment. More specifically, FIG. 4 is an enlarged view of a sealing member 30. As illustrated in FIG. 4, the vacuum double structure according to the second embodiment is configured such that a height of a spacer 32 is increased, so that a distance between respective facing surfaces of an inner wall member 10 and an outer wall member 20 is enlarged. With such a configuration, it is possible to further improve heat insulating properties.

Further, since the height of the spacer 32 is increased, a belt-shaped back-up ring 33a made of metal such as stainless steel is provided on an inner peripheral surface of the spacer 32. Similarly, a belt-shaped back-up ring 33b made of metal such as stainless steel is provided on an outer peripheral surface of the spacer 32. The spacer 32 is supported by those two back-up rings 33a, 33b.

Since the back-up rings 33a, 33b are provided, even if the height of the spacer 32 is increased, it is possible to restrain the spacer 32 made of resin and having elasticity from buckling in a vacuum state, for example. The other configurations are the same as those of the vacuum double structure according to the first embodiment, and therefore, are not described in detail.

Note that the present invention is not limited to the above embodiments, and various modifications can be made within a range that does not deviate from the scope of the present invention, the latter being defined only by the appended claims. For example, instead of the O-ring, other annular packing materials, such as an X-ring, a D-ring, and a T-ring may be used.

## Claims

1. A vacuum double structure comprising:
a tubular and metal inner wall member (10);
a tubular and metal outer wall member (20) in which the inner wall member (10) is accommodated; and
a sealing member (30) provided between a facing surface of the inner wall member (10) and a facing surface of the outer wall member (20), wherein the sealing member (30) maintains a space between the inner wall member (10) and the outer wall member (20) in a vacuum state;
**characterised in that**
the sealing member (30) includes an annular spacer (32), a first annular packing material (31a), and a second annular packing material (31b);
the annular spacer (32) is provided between the facing surface of the inner wall member (10) and the facing surface of the outer wall member (20);
the first annular packing material (31a) is accommodated in a first groove (32a) formed on a first opposed surface of the spacer (32) with respect to the facing surface of the inner wall member (10) and abuts with the facing surface of the inner wall member (10); and
the second annular packing material (31b) is accommodated in a second groove (32b) formed on a second opposed surface of the spacer (32) with respect to the facing surface of the outer wall member (20) and abuts with the facing surface of the outer wall member (20).

2. The vacuum double structure according to claim 1, wherein:
the spacer (32) is a member made of resin and having elasticity; and
the spacer (32) is supported by a metal belt-shaped ring (33a) provided on an inner peripheral surface of the spacer (32) and a metal belt-shaped ring (33b) provided on an outer peripheral surface of the spacer (32).

3. A heat treat furnace comprising:
a first vacuum double structure (1a) according to claim 1 or 2; and
a second vacuum double structure (1b) according to claim 1 or 2, wherein
the heat treat furnace has a structure in which a flange portion (11) of an inner wall member (10) of the first vacuum double structure (1a) and a flange portion (11) of an inner wall member (10) of the second vacuum double structure (1b) are placed to face each other via a third annular packing material (40).

## Patentansprüche

1. Vakuumdoppelstruktur, die Folgendes umfasst:
ein rohrförmiges und metallenes Innenwandelement (10);
ein rohrförmiges und metallenes Außenwandelement (20), in dem das Innenwandelement (10) aufgenommen ist; und
ein Dichtungselement (30) zwischen einer Dichtfläche des Innenwandelements (10) und einer Dichtfläche des Außenwandelements (20) bereitgestellt ist, wobei
das Dichtungselement (30) zwischen dem Innenwandelement (10) und dem Außenwandelement (20) einen Raum in einem Vakuumszustand aufrechterhält;
**dadurch gekennzeichnet, dass**
das Dichtungselement (30) einen ringförmigen Abstandhalter (32), ein erstes ringförmiges Packungsmaterial (31a) und ein zweites ringförmiges Packungsmaterial (31b) beinhaltet;
der ringförmige Abstandhalter (32) zwischen der Dichtfläche des Innenwandelements (10) und der Dichtfläche des Außenwandelements (20) bereitgestellt ist;
das erste ringförmige Packungsmaterial (31a) in einer ersten Nut (32a), die mit Bezug auf die Dichtfläche des Innenwandelements (10) auf einer ersten gegenüberliegenden Fläche des Abstandhalters (32) gebildet ist, und an der Dichtfläche des Innenwandelements (10) anliegt und
das zweite ringförmige Packungsmaterial (31b) in einer zweiten Nut (32b), die mit Bezug auf die Dichtfläche des Außenwandelements (20) auf einer zweiten gegenüberliegenden Fläche des Abstandhalters (32) gebildet ist, und an der Dichtfläche des Außenwandelements (20) anliegt.

2. Vakuumdoppelstruktur nach Anspruch 1, wobei:
der Abstandhalter (32) ein Element ist, das aus Harz besteht und eine Elastizität aufweist; und
der Abstandhalter (32) von einem bandförmigen Ring (33a) aus Metall, der auf einer inneren Umfangsfläche des Abstandhalters (32) bereitgestellt ist, und einem bandförmigen Ring (33b) aus Metall, der auf einer äußeren Umfangsfläche des Abstandhalters (32) bereitgestellt ist, gestützt wird.

3. Wärmebehandlungsofen, der Folgendes umfasst:
eine erste Vakuumdoppelstruktur (1a) nach Anspruch 1 oder 2 und
eine zweite Vakuumdoppelstruktur (1b) nach Anspruch 1 oder 2, wobei
der Wärmebehandlungsofen eine Struktur aufweist, in der ein Flanschabschnitt (11) eines Innenwandelements (10) der ersten Vakuumdoppelstruktur (1a) und ein Flanschabschnitt (11) eines Innenwandelements (10) der zweiten Vakuumdoppelstruktur (1b) platziert sind, um via ein drittes ringförmiges Packungsmaterial (40) einander zugewandt zu sein.

## Revendications

1. Double structure à vide comprenant :
un élément de paroi intérieure (10) métallique et tubulaire ;
un élément de paroi extérieure (20) métallique et tubulaire dans lequel l'élément de paroi intérieure (10) est logé ; et
un élément d'étanchéité (30) placé entre une surface en regard de l'élément de paroi intérieure (10) et une surface en regard de l'élément de paroi extérieure (20), où l'élément d'étanchéité (30) maintient un espace entre l'élément de paroi intérieure (10) et l'élément de paroi extérieure (20) dans un état sous vide ;
**caractérisée en ce que**
l'élément d'étanchéité (30) comprend une entretoise annulaire (32), un premier matériau de garnissage annulaire (31a), et un second matériau de garnissage annulaire (31b) ;
l'entretoise annulaire (32) est prévue entre la surface en regard de l'élément de paroi intérieure (10) et la surface en regard de l'élément de paroi extérieure (20) ;
le premier matériau de garnissage annulaire (31a) est agencé dans une première gorge (32a) formée sur une première surface opposée de l'entretoise (32) par rapport à la surface en regard de l'élément de paroi intérieure (10) et est en butée contre la surface en regard de l'élément de paroi intérieure (10) ; et
le second matériau de garnissage annulaire (31b) est agencé dans une seconde gorge (32b) formée sur une seconde surface opposée de l'entretoise (32) par rapport à la surface en regard de l'élément de paroi extérieure (20) et est en butée contre la surface en regard de l'élément de paroi extérieure (20).

2. Double structure à vide selon la revendication 1, dans laquelle :
l'entretoise (32) est un élément fait en résine et présentant de l'élasticité ; et
l'entretoise (32) est soutenue par un anneau métallique en forme de courroie (33a) mis en place sur une surface périphérique extérieure de l'entretoise (32) et un anneau métallique en forme de courroie (33b) placé sur une surface périphérique extérieure de l'entretoise (32).

3. Four de traitement thermique comprenant :
une première double structure à vide (1a) selon la revendication 1 ou la revendication 2 ; et
une seconde double structure à vide (1b) selon la revendication 1 ou la revendication 2, où
le four de traitement thermique possède une structure dans laquelle une partie bride (11) d'un élément de paroi intérieure (10) de la première double structure à vide (1a) et une partie bride (11) d'un élément de paroi intérieure (10) de la seconde double structure à vide (1b) sont placées pour se faire face par l'intermédiaire d'un troisième matériau de garnissage annulaire (40).
